(19) Europäisches Patentamt / European Patent Office / Office européen des brevets

(11) **EP 4 560 724 A1**

(12) **EUROPEAN PATENT APPLICATION**
published in accordance with Art. 153(4) EPC

(43) Date of publication:
**28.05.2025 Bulletin 2025/22**

(21) Application number: **24823783.6**

(22) Date of filing: **11.06.2024**

(51) International Patent Classification (IPC):
$H01M\ 4/133^{(2010.01)}$  $H01M\ 4/134^{(2010.01)}$
$H01M\ 4/1393^{(2010.01)}$  $H01M\ 4/1395^{(2010.01)}$
$H01M\ 4/587^{(2010.01)}$  $H01M\ 4/36^{(2006.01)}$
$H01M\ 4/38^{(2006.01)}$  $H01M\ 4/48^{(2010.01)}$
$H01M\ 4/505^{(2010.01)}$  $H01M\ 4/525^{(2010.01)}$

(52) Cooperative Patent Classification (CPC):
H01M 4/02; H01M 4/133; H01M 4/134;
H01M 4/1393; H01M 4/1395; H01M 4/36;
H01M 4/38; H01M 4/48; H01M 4/505; H01M 4/525;
H01M 4/587; Y02E 60/10

(86) International application number:
**PCT/KR2024/095877**

(87) International publication number:
**WO 2024/258267 (19.12.2024 Gazette 2024/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **15.06.2023 KR 20230076642**

(71) Applicant: **LG Energy Solution, Ltd.
Seoul 07335 (KR)**

(72) Inventors:
• YOON, Jong Su
  Daejeon 34122 (KR)
• CHO, Jin Ho
  Daejeon 34122 (KR)
• LEE, Taek Soo
  Daejeon 34122 (KR)

(74) Representative: **Goddar, Heinz J.
Boehmert & Boehmert
Anwaltspartnerschaft mbB
Pettenkoferstrasse 22
80336 München (DE)**

(54) **NEGATIVE ELECTRODE FOR LITHIUM SECONDARY BATTERY AND METHOD OF MANUFACTURING SAME**

(57) A negative electrode for lithium secondary battery includes a negative electrode current collector, a first negative electrode active layer, and a second negative electrode active layer. The first negative electrode active layer is provided on at least one side of the negative electrode current collector and has a first carbon-based negative electrode active material. The second negative electrode active layer is provided on the first negative electrode active layer and includes a second carbon-based negative electrode active material and a silicon-based negative electrode active material. The second negative electrode active layer has an alignment (O.I) of the carbon-based negative electrode active material according to Equation 1 of 2.5 or less and satisfies Equation 2 being 8 or less. A manufacturing method including the same is also provided.

**Description**

[Technical Field]

This application claims the benefit of priority to Korean Patent Application No. 10-2023-0076642, filed on June 15, 2023, the disclosure of which is incorporated herein by reference in its entirety.

The present disclosure relates to a negative electrode for a lithium secondary battery and a manufacturing method thereof.

[Background]

In recent years, lithium secondary batteries have been widely applied not only to small devices such as portable electronic devices, but also to medium and large devices such as battery packs or power storage devices for hybrid and electric vehicles. In particular, as environmental concerns have increased in recent years, there has been a lot of research on electric vehicles and hybrid electric vehicles that can replace vehicles that use fossil fuels, such as gasoline and diesel vehicles, which are major sources of air pollution.

Conventional lithium secondary batteries are limited to short-range electric vehicles due to their limited energy density. Therefore, technology has been intensively developed to increase the energy density of lithium secondary batteries.

However, the automotive lithium secondary batteries that have been developed suffer from a long charging time after discharging as the vehicle is driven. Therefore, as the penetration rate of electric vehicles increases, there is a growing need to shorten the charging time to a level that is acceptable to users. In addition, electric vehicles need to be able to handle high-power situations such as sudden acceleration. This requires high rate discharge performance of lithium secondary batteries, but there is no technology that can fulfill this requirement.

Meanwhile, a lithium secondary battery is a rechargeable power generation device consisting of a laminated structure of positive electrode, separator, and negative electrode. When a lithium secondary battery is charged, a lithium deintercalation reaction is induced at the positive electrode of the battery, where lithium contained in the positive electrode active material is oxidized and released, and a lithium intercalation reaction occurs at the negative electrode, where lithium is reduced and enters the negative electrode active material. Generally, the deintercalation reaction in the positive electrode active material is faster than the intercalation reaction in the negative electrode active material, so the fast charge and discharge performance of a lithium secondary battery is mainly determined by the negative electrode.

Materials containing graphite are widely used as the negative electrode active material of the negative electrode. The average potential when the graphite-containing material releases lithium is about 0.2 V (based on Li /Li$^+$), and the discharge potential is relatively flat. For this reason, when graphite is used as the negative electrode active material, the voltage of the secondary battery is high and constant. However, the electrical capacity per unit mass of graphite material is small, 372 mAh/g. On the other hand, the current capacity of graphite materials has been improved close to the above theoretical capacity, so it is difficult to further increase the capacity. In addition, when graphite is used as a negative electrode active material, the intercalation reaction of lithium ions proceeds at a slow rate, which limits the fast charging performance compared to other negative electrode active materials.

In order to improve the high capacity and fast charging performance of lithium secondary batteries, various negative electrode active materials are being investigated. For example, silicon has been the subject of much recent research, as it has been found that silicon can reversibly adsorb and release large amounts of lithium through compound formation reactions with lithium. Silicon has a theoretical maximum capacity of about 4020 mAh/g (9800 mAh/cc, specific gravity 2.23), which is very large compared to graphite-based materials, and is therefore a useful advantage as a high energy density and/or high capacity negative electrode material. However, silicon has limitations in that it induces large volume changes (~300%) during charge and discharge and does not have high rate discharge characteristics, so the lifetime and rapid discharge efficiency of lithium secondary batteries containing it are not high.

Therefore, there is a high need for negative electrode technology that can simultaneously realize high capacity characteristics and high rate charge and discharge characteristics in order to fundamentally solve these problems.

[Summary]

[Technical Problem]

It is an object of the present disclosure to provide a negative electrode for lithium secondary battery capable of simultaneously realizing high capacity characteristics and high rate charge/discharge characteristics, a method of manufacturing the same, and a lithium secondary battery including the negative electrode.

**EP 4 560 724 A1**

[Technical Solution]

To resolve the issues described above,

In an aspect, the present disclosure provides
A negative electrode for lithium secondary battery including:

a negative electrode current collector,
a first negative electrode active layer provided on at least one side of the negative electrode current collector and comprising a first carbon-based negative electrode active material, and
a second negative electrode active layer provided on the first negative electrode active layer and comprising a second carbon-based negative electrode active material and a silicon-based negative electrode active material, wherein
the second negative electrode active layer has
an alignment (O.I) of the carbon-based negative electrode active material according to Equation 1 below of 2.5 or less, and
satisfies Equation 2 below being 8 or less:

$$[\text{Equation 1}]$$

$$O.I = I_{004}/I_{110}$$

$$[\text{Equation 2}]$$

$$I_{Si} * O.I$$

In Equation 1 and Equation 2,

$I_{004}$ represents the area of the peak representing the (0,0,4) crystal face in the X-ray diffraction spectroscopy (XRD) measurement of the negative electrode active layer,
$I_{110}$ represents the area of the peak representing the (1,1,0) crystal face in an X-ray diffraction (XRD) measurement of the negative electrode active layer,
$I_{Si}$ represents the area of the peaks representing the (1,1,1) crystal faces of the silicon-based negative electrode active material in an X-ray diffraction (XRD) spectroscopic analysis of the negative electrode active layer.

Here, the second negative electrode active layer may have an alignment (O.I) of a carbon-based negative electrode active material of 0.1 to 1.5 for Equation 1, and satisfies Equation 2 being 0.7 to 6.

In addition, the first carbon-based negative electrode active material and the second carbon-based negative electrode active material comprise at least one of natural graphite and artificial graphite, respectively.

Furthermore, the silicon-based negative electrode active material may include at least one of silicon (Si), silicon carbide (SiC), and silicon oxide ($SiO_q$, where $0.8 \le q \le 2.5$).

The silicon-based negative electrode active material may be included in an amount of 1 wt% to 40 wt% with respect to the weight of the total negative electrode active material included in the first negative electrode active layer and the second negative electrode active layer.

In addition, the second carbon-based negative electrode active material has an average particle diameter (Dc) of 1 μm to 50 μm, the average particle diameter (Ds) of the silicon-based negative electrode active material is between 0.1 μm and 10 μm, wherein the average particle diameter ratio (Dc/Ds) of the second carbon-based negative electrode active material and silicon-based negative electrode active material may be from 2 to 10.

In addition, the second negative electrode active layer may include 1 wt% to 40 wt% of a silicon-based negative electrode active material, based on the weight of the total negative electrode active layer.

In addition, in an aspect, the present disclosure provides
a manufacturing method of negative electrode for lithium secondary battery including:

applying the first negative electrode slurry and the second negative electrode slurry such that a first negative electrode slurry is located on at least one surface of the negative electrode current collector, and a second negative electrode slurry is located on the first negative electrode slurry;

applying a magnetic field to the applied first negative electrode slurry and the second negative electrode slurry; and drying a first negative electrode slurry and a second negative electrode slurry applied with magnetic field to form a negative electrode active layer, wherein the first negative electrode slurry comprises a first carbon-based negative electrode active material,

the second negative electrode slurry comprises a second carbon-based negative electrode active material and a silicon-based negative electrode active material, wherein the magnetic field is applied at a strength of 10,000 G or less.

Here, the step of applying a magnetic field may be performed for a period of from 1 second to 20 seconds.

Furthermore, in an aspect, the present disclosure provides

a lithium secondary battery including an electrode assembly including a positive electrode, a negative electrode according to the above aspect, and a separator disposed between the positive electrode and the negative electrode.

Here, the positive electrode may include a positive electrode active layer including one or more positive electrode active material among lithium metal oxide represented by Chemical Formula 1 and Chemical Formula 2 below and provided on at least one side of the positive electrode current collector:

$$[\text{Chemical Formula 1}] \qquad Li_x[Ni_yCo_zMn_wM^1_v]O_2$$

$$[\text{Chemical Formula 2}] \qquad LiM^2_pMn_{1-p}O_4$$

In Chemical Formula 1 and Chemical Formula 2,

$M^1$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,

x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,

$M^2$ is Ni, Co, or Fe, and

p is $0.05 \leq p \leq 1.0$.

As an example, the positive electrode active material may include one or more among $LiNi_{0.8}Co_{0.1}Mn_{0.1}O_2$, $LiNi_{0.6}Co_{0.2}Mn_{0.2}O_2$, $LiNi_{0.9}CO_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, and $LiNi_{0.3}Mn_{1.7}O_4$.

Meanwhile, the electrode assembly may be a stack-type electrode assembly; a zigzag electrode assembly; or a zigzag-stack type electrode assembly.

[Advantageous Effects]

The negative electrode for lithium secondary battery according to the present disclosure includes a silicon-based negative electrode active material in the negative electrode active layer together with a carbon-based negative electrode active material, and exhibits a high charge and discharge capacity. Furthermore, the negative electrode active layer of the negative electrode has a two-layer structure, but has the advantage of being effective in improving the high rate charge and discharge characteristics of a lithium secondary battery including the negative electrode by adjusting i) the alignment (O.I) of the carbon-based negative electrode active material and ii) the ratio of the alignment (O.I) and the specific X-ray diffraction peak area of the silicon-based negative electrode active material of the second negative electrode active layer located at the outermost part to satisfy a predetermined range, the effect of improving the high rate charge and discharge characteristics of the lithium secondary battery including the negative electrode is excellent.

[Detailed Description]

The present disclosure is subject to various modifications and can have many aspects, certain of which are described in detail below.

However, this is not intended to limit the present disclosure to any particular aspect and is to be understood to include all modifications, equivalents, or substitutions that fall within the scope of the thought and technology of the present disclosure.

The terms "comprise" or "have" are used herein to designate the presence of characteristics, numbers, steps, actions, components or members described in the specification or a combination thereof, and it should be understood that the possibility of the presence or addition of one or more other characteristics, numbers, steps, actions, components, members or a combination thereof is not excluded in advance.

In addition, when a part of a layer, a film, a region or a plate is disposed "on" another part, this includes not only a case in which one part is disposed "directly on" another part, but a case in which a third part is interposed there between. In contrast, when a part of a layer, a film, a region or a plate is disposed "under" another part, this includes not only a case in which one part is disposed "directly under" another part, but a case in which a third part is interposed there between. In addition, in this application, "on" may include not only a case of disposed on an upper part but also a case of disposed on a lower part.

Further, in the present disclosure, "comprising as a major component" may mean comprising 50 wt% or more (or 50 volume% or more), 60 wt% or more (or 60 volume% or more), 70 wt% or more (or 70 volume% or more), 80 wt% or more (or 80 volume% or more), 90 wt% or more (or 90 volume% or more), or 95 wt% or more (or 95 volume% or more) of the defined component relative to the total weight (or total volume). For example, "comprising graphite as the major component of the negative electrode active material" may mean comprising at least 50 wt%, at least 60 wt%, at least 70 wt%, at least 80 wt%, at least 90 wt%, or at least 95 wt% graphite based on the total weight of the negative electrode active material, and in some cases may mean that the entire negative electrode active material is composed of graphite and comprises 100% graphite.

Further, as used herein, "carbon-based negative electrode active material is oriented" or "carbon-based negative electrode active material is aligned" means that certain crystal faces representing the two-dimensional planar structure of the carbon-based negative electrode active material comprising the negative electrode active material particles (e.g., the a-b axis crystal faces of graphite) are arranged to have a predetermined slope relative to the surface of the negative electrode current collector, which may be different from the carbon-based negative electrode active material particles themselves being arranged to have a specific orientation within the negative electrode active layer.

In addition, "highly oriented carbon-based negative electrode active material" may mean that certain crystal faces representing the two-dimensional planar structure of the carbon-based negative electrode active material contained in the negative electrode active material layer (e.g., the a-b axis crystal faces of graphite) have a high frequency of having a predetermined slope with respect to the surface of the negative electrode current collector. It may also mean, in some cases, that the crystal faces of the carbon-based negative electrode active material contained in the negative electrode active layer are arranged at a high angle (e.g., a near-vertical angle, greater than 45°; more specifically, greater than 60°) relative to the negative electrode current collector surface.

Furthermore, "high alignment of the carbon-based negative electrode active material" may refer to having a large value of the "alignment (O.I)" referred to herein, meaning that certain crystal faces (e.g., a-b axis crystal faces of graphite) representing the two-dimensional planar structure of the carbon-based negative electrode active material contained in the negative electrode active layer are arranged at a low angle (e.g., less than 45°) relative to the surface of the negative electrode current collector. Conversely, "low alignment of the carbon-based negative electrode active material" may mean that the "alignment (O.I)" has a small value, such that the crystal faces of the carbon-based negative electrode active material contained in the negative electrode active layer are arranged at a high angle (e.g., a near-vertical angle, greater than 45°; more specifically, greater than 60°) relative to the negative electrode current collector surface.

Furthermore, as used herein, "crystal face of a carbon-based negative electrode active material" refers to a face on which atoms of a carbon-based negative electrode active material form the shape of a crystal, which in the present disclosure may mean a crystal face comprising a plane of a carbon-based negative electrode active material, or a crystal face comprising an a-axis/b-axis/a-b-axis of a carbon-based negative electrode active material crystal.

Furthermore, as used herein, "average particle diameter ($D_{50}$)" means the particle diameter at which the sum value of the particle diameter distribution of the particles is 50%, which is also referred to as the median diameter.

The present disclosure will now be described in more detail.

## Negative electrode for lithium secondary battery

In an aspect, the present disclosure provides
A negative electrode for lithium secondary battery including:

a negative electrode current collector,
a first negative electrode active layer provided on at least one side of the negative electrode current collector and comprising a first carbon-based negative electrode active material, and
a second negative electrode active layer provided on the first negative electrode active layer and comprising a second carbon-based negative electrode active material and a silicon-based negative electrode active material, wherein the second negative electrode active layer has
an alignment (O.I) of the carbon-based negative electrode active material according to Equation 1 below of 2.5 or less, and
satisfies Equation 2 below being 8 or less:

[Equation 1]

$$O.I = I_{004}/I_{110}$$

[Equation 2]

$$I_{Si} * O.I$$

In Equation 1 and Equation 2,

$I_{004}$ represents the area of the peak representing the (0,0,4) crystal face in the X-ray diffraction spectroscopy (XRD) measurement of the negative electrode active layer,

$L_{110}$ represents the area of the peak representing the (1,1,0) crystal face in an X-ray diffraction (XRD) measurement of the negative electrode active layer,

$I_{Si}$ represents the area ratio of the peaks representing the (1,1,1) crystal faces of the silicon-based negative electrode active material in an X-ray diffraction (XRD) spectroscopic analysis of the negative electrode active layer.

A negative electrode for lithium secondary battery according to the present disclosure includes a negative electrode active layer on at least one side of the negative electrode current collector. The negative electrode active layer is a layer that embodies the electrical activity of the negative electrode, and includes as a main component a negative electrode active material that implements an electrochemical redox reaction during charging and discharging of the battery.

In this case, the negative electrode active layer may have a two-layer structure in which a first negative electrode active layer and a second negative electrode active layer are sequentially stacked on the negative electrode current collector. Since the composition of each layer of the negative electrode active layer with a two-layer structure can be easily controlled, the performance of the negative electrode can be improved by controlling the type or content of the components contained in each layer according to a specific purpose, such as increasing the energy efficiency of the battery or improving the adhesion between the active layer and the current collector. For example, the negative electrode active layer may selectively include a silicon-based negative electrode active material with a high charge and discharge capacity of the battery only in the second negative electrode active layer that faces the positive electrode. Furthermore, the negative electrode active layer may selectively include a negative electrode active material such as natural graphite that has good adhesion only to the first negative electrode active layer in contact with the negative electrode current collector, or may include a high content of a binder that imparts adhesion of the components comprising the active layer.

In the present disclosure, the first negative electrode active layer includes a first carbon-based negative electrode active material, and the second negative electrode active layer includes a second carbon-based negative electrode active material and a silicon-based negative electrode active material.

In this case, the first carbon-based negative electrode active material and the second carbon-based negative electrode active material included in each negative electrode active layer may be the same and/or different in type and/or content. Specifically, the first carbon-based negative electrode active material and the second carbon-based negative electrode active material refer to a material having carbon atoms as its main component, and such carbon-based negative electrode active material may include graphite. The graphite may include one or more among natural graphite and artificial graphite. For example, the first carbon-based negative electrode active material and the second carbon-based negative electrode active material may include natural graphite or artificial graphite alone, or in some cases, a mixture of natural and artificial graphite. In this case, the ratio of natural graphite to artificial graphite may be 5 to 50:50 to 95, or 20 to 45:55 to 80, based on weight. By including natural graphite and artificial graphite in the mixing ratio as described above, the carbon-based negative electrode active material can achieve a high orientation of the carbon-based negative electrode active material to the surface of the negative electrode current collector while strengthening the adhesion of the negative electrode current collector and the negative electrode active layer.

In one example, the first carbon-based negative electrode active material may include natural graphite and artificial graphite in a weight ratio of 30 to 50:50 to 70, and the second carbon-based negative electrode active material may include artificial graphite alone.

Further, the first carbon-based negative electrode active material and the second carbon-based negative electrode active material are preferably spherical graphite assemblies formed by aggregation of a plurality of flaky graphites. The flaky graphite can be natural graphite, artificial graphite, mesophase calcined carbon (bulk mesophase) based on tar and pitch, graphitized coke (raw coke, green coke, pitch coke, needle coke, petroleum coke, etc.), and the like, and in particular, the graphite assembly is preferably assembled using a plurality of highly crystalline natural graphite.

Furthermore, one graphite assembly may be formed by assembling from 2 to 100, preferably from 3 to 20, pieces of flaky graphite.

Such carbon-based active materials, specifically graphite, may have a spherical particle shape, wherein the sphericity of the graphite particles may be greater than or equal to 0.75, such as 0.75 to 1.0; 0.75 to 0.95; 0.8 to 0.95; or 0.90 to 0.99. Here, "sphericity" may mean the ratio of the shortest diameter (short diameter) to the longest diameter (long diameter) of any diameter passing through the center of the particle. A sphericity of 1 means that the particle has a spherical shape. The sphericity can be determined by measuring it with a particle shape analyzer or by measuring the shape of the particles using a scanning electron microscope (SEM) or energy dispersive spectrometer and analyzing the measured results.

The present disclosure can realize a high electrical conductivity of the negative electrode active layer by realizing a shape of the first carbon-based negative electrode active material and the second carbon-based negative electrode active material close to a spherical shape. Therefore, the negative electrode including a spherical carbon-based negative electrode active material can improve the capacity of a secondary battery, and has the advantage of increasing the specific surface area per unit weight of the negative electrode active material, which can improve the adhesion between the negative electrode active layer and the current collector.

Furthermore, the silicon-based negative electrode active material is a material comprising silicon (Si) as a main component and is contained only in the second negative electrode active layer. The present disclosure can increase the charge and discharge capacity of the negative electrode by including the silicon-based negative electrode active material in the second negative electrode active layer adjacent to the positive electrode active layer. In addition, there is a problem that the durability of the negative electrode is reduced when the silicon-based negative electrode active material is included in the first negative electrode active layer due to the large volume change of the silicon-based negative electrode active material during charging and discharging. However, the present disclosure can maintain high durability of the negative electrode by applying the silicon-based negative electrode active material to the second negative electrode active layer.

Such silicon-based negative electrode active materials include silicon (Si), silicon carbide (SiC), silicon monoxide (SiO) or silicon dioxide ($SiO_2$), which may be included in the second negative electrode active layer alone or in combination. When silicon monoxide (SiO) and silicon dioxide (SiO2) are uniformly mixed or compounded and included in the negative electrode active layer as silicon-based negative electrode active materials, they may be denoted as silicon oxide ($SiO_q$, where $0.8 \leq q \leq 2.5$).

Furthermore, the silicon-based negative electrode active material may be doped or alloyed with Li, Mg, Al, Ca, Ti, or the like. Furthermore, the silicon-based negative electrode active material may be surface treated with a carbon coating layer or the like for the purpose of suppressing volume expansion during charging in the presence of oxygen (O) while improving the electrical conductivity of the negative electrode active material.

Furthermore, the carbon-based negative electrode active material and the silicon-based negative electrode active material contained in each layer of the negative electrode active layer may comprise at least 85 parts by weight based on 100 parts by weight of the negative electrode active layer as a whole. Specifically, the carbon-based negative electrode active material and silicon-based negative electrode active material in each layer of the negative electrode active layer may comprise at least 90 parts by weight, at least 93 parts by weight, or at least 95 parts by weight, based on 100 parts by weight of the total weight of the negative electrode active layer.

Furthermore, the silicon-based negative electrode active material may be included in an amount of 0.1 to 40 wt% with respect to the total weight of the total negative electrode active material contained in the first negative electrode active layer and the second negative electrode active layer, and may be included in an amount of 0.5 to 20 wt%, 1 to 9 wt%, 5 to 15 wt%, 3 to 7 wt%, 11 to 19 wt%, 13 to 17 wt%, 15 to 20 wt%, 10 to 30 wt%, 20 to 40 wt%, 25 to 35 wt% 15 to 25 wt%, or 9 to 22 wt%. By adjusting the total content ratio of the total negative electrode active material contained in the negative electrode active layer and the content ratio of the silicon-based negative electrode active material contained in the total negative electrode active material to the above ranges, the present disclosure can improve the charge capacity per unit mass while reducing the lithium consumption and irreversible capacity loss during the initial charge and discharge of the secondary battery. Furthermore, by minimizing the volume change of the negative electrode active layer during charging and discharging of the secondary battery, the structural stability of the negative electrode active layer can be improved, thereby increasing the lifetime of the secondary battery.

Furthermore, the negative electrode according to the present disclosure can further improve its high rate charge and discharge characteristics by controlling the crystal structure characteristics of the negative electrode active materials contained in the second negative electrode active layer adjacent to the positive electrode.

In one example, the second carbon-based negative electrode active material contained in the second negative electrode active layer may have an alignment (O.I) according to Equation 1 below of 2.5 or less:

## [Equation 1]

$$O.I = I_{004}/I_{110}$$

In Equation 1,

$I_{004}$ represents the area of the peak representing the (0,0,4) crystal face in the X-ray diffraction spectroscopy (XRD) measurement of the negative electrode active layer,

$L_{110}$ represents the area of the peak representing the (1,1,0) crystal face in an X-ray diffraction (XRD) measurement of the negative electrode active layer,

The alignment (O.I) of the second carbon-based negative electrode active material may be an indicator of the degree to which the ab-axis crystal face of the carbon-based negative electrode active material is oriented in a certain direction, specifically with respect to the surface of the negative electrode current collector, when measured by X-ray diffraction (XRD). Specifically, the second negative electrode active layer exhibits peaks of $2\theta=26.5\pm0.2°$, $42.4\pm0.2°$, $43.4\pm0.2°$, $44.6\pm0.2°$, $54.7\pm0.2°$, and $77.5\pm0.2°$ for the second carbon-based negative electrode active material, graphite, in X-ray diffraction measurements. These represent the (0,0,2), (1,0,0), (1,0,1)R, (1,0,1)H, (0,0,4), and (1,1,0) faces of graphite. The peak at $2\theta=43.4\pm0.2°$ can also be seen as an overlap of the peaks corresponding to the (1,0,1)R face of the second carbon-based negative electrode active material and the (1,1,1) face of the current collector, for example, copper (Cu).

Of these, the ratio of the area obtained by integrating the respective intensities of the peak at $2\theta=54.7\pm0.2°$ representing the (0,0,4) face and the peak at $2\theta=77.5\pm0.2°$ representing the (1,1,0) face can be used to measure the alignment (O.I) of the secondary carbon-based negative electrode active material.

Since the peak at $2\theta=54.7\pm0.2°$ is a peak representing a crystal face of the second carbon-based negative electrode active material having a slope with the negative electrode current collector, the alignment (O.I) may mean that the slope with respect to the surface of the negative electrode current collector is closer to 90° when the value is close to 0, and the slope with respect to the surface of the negative electrode current collector is closer to 0° or 180° when the value is larger. In other words, the second negative electrode active layer according to the present disclosure may be aligned such that the second carbon-based negative electrode active material has an angle of 60° or more, 70° or more, 70-90°, 80-90°, 65-85°, or 70-85° with respect to the negative electrode current collector. Accordingly, the second negative electrode active layer may have a lower alignment (O.I) of the second carbon-based negative electrode active material compared to when the second carbon-based negative electrode active material is aligned at a lower angle of less than 60°. As an example, the second negative electrode active layer may have an alignment (O.I) of the carbon-based negative electrode active material according to Equation 1 of 2.5 or less, 2.0 or less, 1.3 or less, 1.0 or less, 0.5 or less, 0.1 to 2.5, 0.1 to 2.0, 0.1 to 1.5, 0.2 to 1.3, 0.4 to 1.3, 0.4 to 1.3, 0.4 to 1.0, 0.5 to 1.3, 1.1 to 1.3, 0.5 to 0.9, or 0.4 to 0.6. Here, the alignment (O.I) indicates the alignment of the ab-axis crystal faces of the carbon-based negative electrode active material, and does not indicate the degree to which the carbon-based negative electrode active material particles are aligned by rotating themselves within the active layer.

By adjusting the alignment (O.I) of the second carbon-based negative electrode active material contained in the second negative electrode active layer as described above, the present technology can obtain an ion migration channel in which lithium ions can migrate in a shorter distance inside the negative electrode active layer. As a result, the negative electrode of the present technology can prevent the increase in resistance due to the long travel distance of the lithium ions, thus preventing the high rate charge performance from degrading due to electrical resistance, and at the same time improving the high rate discharge efficiency.

As another example, the second positive electrode active layer may satisfy Equation 2 below with 8 or less:

## [Equation 2]

$$I_{Si} * O.I$$

In Equation 2,

O.I represents the alignment of the second carbon-based negative electrode active material according to Equation 1,

$I_{si}$ represents the area ratio of the peaks representing the (1,1,1) crystal faces of the silicon-based negative electrode active material in an X-ray diffraction (XRD) spectroscopic analysis of the negative electrode active layer.

In pure silicon having a crystalline phase, the distance or density between silicon elements forming the crystal varies depending on the type of crystal face. Therefore, pure silicon (Si) having a crystalline phase may exhibit different electrical properties such as electron mobility depending on the orientation of each crystal face exposed to the surface (i.e., crystal orientation). For example, among the crystal directions of silicon crystals, (1,0,0), (1,1,1), and (1,1,0) may exhibit high electron mobility in the order of (1,0,0)>(1,1,1)>(1,1,0), and the intercalation of metal ions may exhibit the order of (1,1,0)>(1,1,1)>(1,0,0).

Accordingly, the present technology is characterized by controlling the characteristics exhibited by the (1,1,1) face of the crystal face of pure silicon having a crystalline phase. Specifically, the second negative electrode active layer according to the disclosure exhibits a diffraction peak representing a silicon-based negative electrode active material in X-ray diffraction (XRD) spectroscopic analysis along with a diffraction peak representing the crystal face of the second carbon-based negative electrode active material. For example, if the silicon-based negative electrode active material is silicon oxide ($SiO_q$, where $0.8 \leq q \leq 2.5$), the X-ray diffraction measurement of the second negative electrode active layer exhibits a smooth, broad curved spectrum indicative of amorphous silicon oxide, with peaks at $2\theta=28.4\pm0.2°$, $47.3\pm0.5°$, and $56.1\pm0.2°$ indicative of pure Si, respectively. These peaks represent the (1,1,1), (2,2,0), and (3,1,1) crystal faces of pure Si, respectively.

In this case, the diffraction peak representing the (1,1,1) crystal face of pure Si becomes stronger in intensity as the ab-axis crystal face of the second carbon-based negative electrode active material is aligned at a higher angle to the negative electrode current collector surface, and the area value integrated over the intensity of the peak may also show a tendency to increase. This indicates a higher exposure of the (1,1,1) crystal faces of silicon on the surface of the second negative electrode active layer. However, as mentioned above, the degree of exposure of the (1,1,1) crystal face may affect the mobility of electrons and metal ions, and the mobility of electrons and metal ions may have a trade-off relationship, so it is preferable that the degree of exposure of the (1,1,1) crystal face is controlled to satisfy a predetermined range.

Accordingly, the present technology achieves this by adjusting Equation 2 to 8 or less. Specifically, the second negative electrode active layer may satisfy Equation 2 as 7 or less; 6 or less; 4 or less; 3.5 or less; 3 or less; 0.7 to 8; 0.7 to 6; 1 to 6; 1.75 to 6; 1.75 to 4; 1.75 to 3.5; 1.75 to 3; 1.75 to 2.5; 1.75 to 2.1; 2 to 6; 2 to 4; 2.1 to 3.5; 2.1 to 3.1; 3 to 5; or 2.5 to 3. Here, the Equation 2 means calculating an alignment (O.I) according to the Equation 1 from diffraction peaks for the second carbon-based negative electrode active material in an X-ray diffraction spectroscopy analysis of the second negative electrode active layer, and reflecting in the calculated alignment (O.I) an area integral of the diffraction peak intensities representing the (1,1,1) face of the silicon-based negative electrode active material. The present technology can significantly increase the lithium ion mobility and intercalation performance of the second negative electrode active layer including the second carbon-based negative electrode active material and the silicon-based negative electrode active material by satisfying Equation 2 in the range described above, thereby significantly increasing the high-rate charge and discharge efficiency of the secondary battery including the second negative electrode active layer.

Furthermore, the second carbon-based negative electrode active material and the silicon-based negative electrode active material contained in the second negative electrode active layer may have a predetermined particle diameter. Specifically, the average particle diameter (Dc) of the second carbon-based negative electrode active material may be from 1 $\mu$m to 50 $\mu$m, the average particle diameter (Ds) of the silicon-based negative electrode active material may be from 0.1 $\mu$m to 10 $\mu$m, and the average particle diameter ratio (Dc/Ds) of the second carbon-based negative electrode active material and the silicon-based negative electrode active material may be from 2 to 10.

Specifically, the second carbon-based negative electrode active material may exhibit an average particle diameter ($D_{50}$, Dc) of 1 $\mu$m to 50 $\mu$m, and may be selectively applied within the range to match the average thickness of the second negative electrode active layer. For example, the second carbon-based negative electrode active material may have an average particle diameter of 1 $\mu$m to 40 $\mu$m; 1 $\mu$m to 30 $\mu$m; 10 $\mu$m to 40 $\mu$m; 15 $\mu$m to 30 $\mu$m; 25 $\mu$m to 50 $\mu$m; 11 $\mu$m to 19 $\mu$m; 15 $\mu$m to 25 $\mu$m; 20 $\mu$m to 30 $\mu$m; 1 $\mu$m to 20 $\mu$m; 1 $\mu$m to 10 $\mu$m; 5 $\mu$m to 15 $\mu$m; 10 $\mu$m to 20 $\mu$m; 15 $\mu$m to 30 $\mu$m; 15 $\mu$m to 20 $\mu$m; 21 $\mu$m to 26 $\mu$m; 25 $\mu$m to 30 $\mu$m; 11 $\mu$m to 17 $\mu$m; 16 $\mu$m to 23 $\mu$m; 2 $\mu$m to 7 $\mu$m; 0.5 $\mu$m to 5 $\mu$m; or 1 $\mu$m to 3 $\mu$m average particle diameter ($D_{50}$). A spherical second carbon-based negative electrode active material may benefit from a smaller particle diameter to maximize the disorder in the direction of expansion for each particle to prevent the particles from swelling upon charging with lithium ions. However, if the particle diameter of the second carbon-based negative electrode active material is less than 1.0 $\mu$m, a large amount of binder is required due to the increase in the number of particles per unit volume, and the sphericity and spherization yield may be lower. On the other hand, if the average particle diameter exceeds 50 $\mu$m, the expansion rate of the negative electrode active material increases significantly during the charge and discharge of the secondary battery, so the cohesion between the negative electrode active material particles and the cohesion between the negative electrode active material particles and the current collector may decrease as the charge and discharge is repeated, resulting in a significant reduction in the cycle characteristics.

Further, the silicon-based negative electrode active material may exhibit an average particle diameter ($D_{50}$, Ds) of 0.1 $\mu$m to 10 $\mu$m, and more specifically, an average particle diameter ($D_{50}$) of 0.1 $\mu$m to 5 $\mu$m; 0.1 $\mu$m to 3 $\mu$m; 0.1 $\mu$m to 1 $\mu$m; 0.5 $\mu$m to 2 $\mu$m; 0.5 $\mu$m to 5 $\mu$m; 1 $\mu$m to 5 $\mu$m; 3 $\mu$m to 7 $\mu$m; 5 $\mu$m to 10 $\mu$m; 1 $\mu$m to 3 $\mu$m; 4 $\mu$m to 9 $\mu$m; 0.1 $\mu$m to 0.9

μm; 0.8 μm to 1.2 μm; or 0.3 μm to 0.8 μm.

When the average particle diameter of the silicon-based negative electrode active material is less than 0.1 μm, it is difficult to disperse the second negative electrode active layer uniformly, and as the charging and discharging of the secondary battery proceeds, the redox reactions of the agglomerated and non-agglomerated regions of the silicon-based negative electrode active material are induced unevenly, which may promote deterioration of the second negative electrode active layer. Furthermore, when the average particle diameter of the silicon-based negative electrode active material exceeds 10 μm, it is difficult to control the crystal face of the silicon-based negative electrode active material, and the expansion ratio of the second negative electrode active layer to the unit area increases significantly during charge and discharge of the secondary battery, resulting in a significant decrease in the cycling characteristics as the charge and discharge are repeated.

Further, the average particle diameter ratio (Dc/Ds) of the second carbon-based negative electrode active material and the silicon-based negative electrode active material may be from 2 to 10, more specifically from 2 to 7; 2 to 5; 3 to 7; 4 to 8; 5 to 10; or 6 to 9.

By satisfying the average particle diameter ratio (Dc/Ds) of the second carbon-based negative electrode active material and the silicon-based negative electrode active material in the above range, the present technology can induce a structure in which the silicon-based negative electrode active material is filled in the voids formed by the plurality of second carbon-based negative electrode active materials. In this case, the void acts as a buffer to buffer the volume expansion of the silicon-based negative electrode active material during charging and discharging of the secondary battery, so that the volume expansion of the second negative electrode active layer can be minimized.

In addition, when the average particle diameter ratio (Dc/Ds) is less than the lower limit of the above-described range, the influence of the second carbon-based negative electrode active material on the silicon-based negative electrode active material is reduced, and it is difficult to control the crystal face of pure silicon having a crystalline phase. Furthermore, if the average particle diameter ratio (Dc/Ds) exceeds the upper limit of the range described above, the second negative electrode active layer is accelerated to deteriorate during charging and discharging of the secondary battery, thereby shortening its service life.

Meanwhile, the average thickness of the negative electrode active layer may be from 100 μm to 300 μm. Specifically, the average thickness of the negative electrode active layer may be 100 μm to 250 μm; 100 μm to 250 μm; or 130 μm to 190 μm. By adjusting the average thickness of the negative electrode active layer to the above range, the present technology can easily control the crystalline characteristics of the negative electrode active material contained in the second negative electrode active layer, thereby improving the high rate charge and discharge characteristics of the secondary battery including the negative electrode of the present disclosure.

Further, the first negative electrode active layer and the second negative electrode active layer may have the same or different average thicknesses. Specifically, the average thickness of the first negative electrode active layer (D1) and the average thickness of the second negative electrode active layer (D2) may have a ratio of 1:0.5 to 3, or more specifically, a ratio of 1:0.8 to 2.5, 1:1 to 2.5, 1:1.1 to 2, 1:0.9 to 1.1, or 1:1.5 to 3. By adjusting the ratio of the average thickness of the first negative electrode active layer and the second negative electrode active layer to the above range, the present technology can maximize the charge/discharge capacity while keeping the durability of the negative electrode high.

Furthermore, the first negative electrode active layer and the second negative electrode active layer according to the present disclosure may optionally further include, in addition to the negative electrode active material as the main component, a conductive material, a binder, other additives, etc. as required.

The conductive material may include one or more of carbon black, acetylene black, ketjen black, carbon nanotubes, carbon fiber, and the like, but is not limited thereto.

In one example, the negative electrode active layer may contain carbon black, carbon nanotubes, carbon fibers, or the like as a conductive material alone or in combination.

In this case, the content of the conductive material may be from 0.1 to 10 parts by weight based on 100 parts by weight of the negative electrode active layer. Specifically, the content of the conductive material may be 0.1 to 8 parts by weight, 0.1 to 5 parts by weight, 0.1 to 3 parts by weight, 2 to 6 parts by weight, or 0.5 to 2 parts by weight, based on 100 parts by weight of the negative electrode active layer. By controlling the content of the conductive material in the range as described above, the present technology can prevent the resistance of the negative electrode from increasing due to a low content of the conductive material, resulting in a decrease in the charging capacity, and can prevent the content of the negative electrode active material from decreasing due to an excessive amount of the conductive material, resulting in a decrease in the charging capacity, or a decrease in the fast charging characteristic due to an increase in the loading amount of the negative electrode active layer.

Furthermore, the binder may be suitably applied as a component that assists in the coupling of the negative electrode active material to the conductive material and the like and the coupling to the current collector to the extent that it does not degrade the electrical properties of the electrode, and specifically may include one or more selected from the group consisting of vinylidene fluoride-hexafluoropropylene copolymer (PVDF-co-HFP), polyvinylidenefluoride (PVdF), polyacrylonitrile, and polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer, sulfonated ethylene-propylene-diene monomer, styrene butadiene rubber (SBR), and fluorinated rubber.

The content of the binder may be from 0.1 to 10 parts by weight based on 100 parts by weight of the negative electrode active layer. More specifically, the content of the binder may be 0.1 to 8 parts by weight, 0.1 to 5 parts by weight, 0.1 to 3 parts by weight, or 2 to 6 parts by weight, based on 100 parts by weight of the negative electrode active layer. By controlling the content of the binder in the negative electrode active layer to the above range, the present technology can prevent the adhesion of the active layer from deteriorating due to a low content of binder or the electrical properties of the electrode from deteriorating due to an excess of binder.

Furthermore, the negative electrode current collector is not particularly limited as long as it has a high conductivity without causing chemical changes in the battery, and for example, copper, stainless steel, nickel, titanium, calcined carbon, and the like can be used, and in the case of copper or stainless steel, those that are surface treated with carbon, nickel, titanium, silver, and the like can also be used. Furthermore, the average thickness of the negative electrode current collector may be suitably applied from 1 to 500 $\mu$m, considering the conductivity and total thickness of the negative electrode being manufactured.

## Lithium secondary battery

Furthermore, in one aspect, the present technology provides
a lithium secondary battery including an electrode assembly including a positive electrode, a negative electrode of the present disclosure as described above, and a separator disposed between the positive electrode and negative electrode.

A lithium secondary battery according to the present disclosure includes an electrode assembly having a structure in which a plurality of positive electrodes and a plurality of negative electrodes are arranged alternately and a separator is positioned between them. The lithium secondary battery having the negative electrode of the present disclosure described above not only has a high charge and discharge capacity, but also has excellent high rate charge and discharge characteristics, and is therefore useful as a power source for medium and large devices such as electric vehicles.

In this case, the negative electrode has the same configuration as the configuration described above, so the specific description is omitted.

Further, the positive electrode may comprise a positive electrode active layer comprising a positive electrode active material on the positive electrode current collector, the positive electrode active layer optionally further comprising a conductive material, a binder, other additives, and the like as required.

The positive electrode active material may include one or more of the lithium metal oxides represented by Formula 1 and Formula 2 below, which are capable of reacting electrochemically on the positive electrode current collector to reversibly intercalate and deintercalate lithium ions:

[Chemical Formula 1] $\quad\quad Li_x[Ni_yCo_zMn_wM^1_v]O_2$

[Chemical Formula 2] $\quad\quad LiM^2_pMn_qP_rO_4$

In Chemical Formula 1 and Chemical Formula 2,

$M^1$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo
x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,
$M^2$ is Ni, Co, or Fe, and
p is $0.05 \leq p \leq 1.0$,
q is 2-p and,
r is 0 or 1.

Lithium metal oxides, represented by Chemical Formula 1 and Chemical Formula 2 above, are materials containing a high content of nickel (Ni) and manganese (Mn), respectively, and when used as a positive electrode active material, have the advantage of being able to stably supply high capacity and/or high voltage electricity compared to conventionally used positive electrode active materials such as lithium iron phosphate ($LiFePO_4$).

In this case, the lithium metal oxide represented by Chemical Formula 1 may include $LiNi_{0.8}Co_{0.1}Mn_{0.1}O_2$, $LiNi_{0.6}Co_{0.2}Mn_{0.2}O_2$, $LiNi_{0.9}CO_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, and the like. Further, the lithium metal oxide represented by Chemical Formula 2 may include $LiNi_{0.7}Mn_{1.3}O_4$;

$LiNi_{0.5}Mn_{1.5}O_4$; $LiNi_{0.3}Mn_{1.7}O_4$ and the like. The lithium metal oxides represented by Chemical Formula 1 and/or Chemical Formula 2 may be used alone or in combination.

Furthermore, the positive electrode active material may be included in an amount of 85 parts by weight or more with respect to 100 parts by weight of the positive electrode active layer, and more specifically may be included in an amount of at least 90 parts by weight, at least 93 parts by weight, or at least 95 parts by weight with respect to 100 parts by weight of the positive electrode active layer.

Furthermore, the positive electrode active layer may further include a conductive material, a binder, other additives, etc. in addition to the positive electrode active material.

In this case, the conductive material used to improve the electrical performance of the positive electrode may be any material conventionally used in the art, but more particularly may include at least one type selected from the group consisting of natural graphite, artificial graphite, carbon black, acetylene black, denka black, ketchen black, super-P, channel black, furnace black, lamp black, thermal black, graphene, and carbon nanotubes.

Moreover, the conductive material may be included in an amount of 0.1 to 5 parts by weight with respect to 100 parts by weight of the positive electrode active layer. Specifically, the conductive material may be included in an amount of 0.1 to 4 parts by weight; 2 to 4 parts by weight; 1.5 to 5 parts by weight; 1 to 3 parts by weight; 0.1 to 2 parts by weight; or 0.1 to 1 part by weight with respect to 100 parts by weight of the positive electrode active layer.

Furthermore, the binder serves to bind the positive electrode active material, the positive electrode additive, and the conductive material to each other, and may be used without limitation as long as it has this function. Specifically, the binder may include one or more resins selected from the group consisting of polyvinylidene fluoride-hexafluoropropylene copolymer (PVdF-co-HFP), polyvinylidenefluoride (PVdF), polyacrylonitrile, polymethylmethacrylate, and copolymers thereof. In one example, the binder may include polyvinylidenefluoride.

Additionally, the binder may be included in an amount of 1 to 10 parts by weight of each positive electrode active layer, more particularly from 2 to 8 parts by weight; or from 1 to 5 parts by weight.

The total thickness of the positive electrode active layer is not particularly limited, but may be from 50 $\mu$m to 300 $\mu$m. More specifically, the total thickness of the positive electrode active layer may be 100 $\mu$m to 200 $\mu$m; 80 $\mu$m to 150 $\mu$m; 120 $\mu$m to 170 $\mu$m; 150 $\mu$m to 300 $\mu$m; 200 $\mu$m to 300 $\mu$m; or 150 $\mu$m to 190 $\mu$m.

Furthermore, as a positive electrode current collector, the positive electrode may use those having a high conductivity without causing chemical changes in the battery. For example, stainless steel, aluminum, nickel, titanium, calcined carbon, and the like can be used, and in the case of aluminum or stainless steel, those that are surface treated with carbon, nickel, titanium, silver, and the like can also be used. Furthermore, the average thickness of the current collector may be suitably applied from 3 to 500 $\mu$m, considering the conductivity and total thickness of the positive electrode to be manufactured.

Furthermore, the separator interposed between the positive electrode and the negative electrode of each unit cell is an insulating thin film having high ion permeability and mechanical strength, and may include one or more polymers such as, but not particularly limited to, those conventionally used in the art, such as polypropylene, polyethylene, and polyethylene-propylene copolymers, which are chemically resistant and hydrophobic. The separator may be in the form of a porous polymeric substrate, such as a sheet or nonwoven fabric including the polymer described above, and in some cases may be in the form of a composite separator in which organic or inorganic particles are coated by an organic binder on the porous polymeric substrate. Furthermore, the separator may have an average diameter of the pores of 0.01 to 10 $\mu$m, and an average thickness of 5 to 300 $\mu$m.

The lithium secondary battery according to the present disclosure may be a secondary battery, without being particularly limited, including a stack-type; zigzag-type; or zigzag-stack type electrode assembly. As one example, the lithium secondary battery according to the present disclosure may be a pouch-type secondary battery or a prismatic secondary battery.

Pouch-type and/or prismatic secondary batteries have the advantage of being highly utilizable in terms of energy density, as they can pack a high density of secondary battery unit cells within a limited space.

**Manufacturing method of a negative electrode**

Furthermore, in one aspect, the present disclosure provides
a manufacturing method of negative electrode for lithium secondary battery including:

applying the first negative electrode slurry and the second negative electrode slurry such that a first negative electrode slurry is located on at least one surface of the negative electrode current collector, and a second negative electrode slurry is located on the first negative electrode slurry;
applying a magnetic field to the applied first negative electrode slurry and the second negative electrode slurry; and
drying a first negative electrode slurry and a second negative electrode slurry applied with magnetic field to form a negative electrode active layer, wherein

the first negative electrode slurry comprises a first carbon-based negative electrode active material,

the second negative electrode slurry comprises a second carbon-based negative electrode active material and a silicon-based negative electrode active material, wherein

the magnetic field is applied at a strength of 10,000 G or less.

A method of manufacturing a negative electrode according to the present disclosure means a method of manufacturing the negative electrode of the present disclosure as described above. The method of manufacturing the negative electrode can produce a negative electrode having a negative electrode active layer having a controlled crystalline characteristic of the negative electrode active material by applying a negative electrode slurry on the negative electrode current collector, applying a magnetic field to the surface of the applied negative electrode slurry, and drying each negative electrode slurry.

Here, the step of applying the negative electrode slurry includes coating the surface of the moving negative electrode current collector by discharging a negative electrode slurry containing a carbon-based negative electrode active material. The above step may be applied in any manner conventionally applied in the art without limitation, but preferably by die coating. The die coating method may be performed by means of a slot die having a shim for controlling the discharge conditions of the negative electrode slurry. In this case, by controlling the shape of the shim, the loading amount, coating thickness, etc. of the negative electrode slurry applied to the negative electrode current collector can be easily controlled.

In the present disclosure, a dual die is utilized to simultaneously apply a first negative electrode slurry and a second negative electrode slurry on the negative electrode current collector. This has the advantage of significantly increasing the process efficiency compared to applying each slurry sequentially.

Meanwhile, the step of applying a magnetic field to the negative electrode slurry may be a step of controlling the crystal properties of the negative electrode active material contained in the negative electrode slurry. Specifically, this step may include applying a magnetic field to the surfaces of the first negative electrode slurry and the second negative electrode slurry applied on the negative electrode current collector to align the ab-axis crystal face of the carbon-based negative electrode active material contained in each negative electrode slurry at a high angle to the negative electrode current collector and to control the (1,1,1) crystal face characteristic of the silicon-based negative electrode active material contained in the second negative electrode slurry.

In this case, the magnetic field application may be applied by magnet parts disposed on the upper and lower parts of the negative electrode current collector, which is moved with a negative electrode slurry applied to its surface. Further, the polarity of the upper and lower magnet parts may be different.

Furthermore, the alignment (O.I) of the carbon-based negative electrode active material contained in the negative electrode slurry may be controlled by the strength of the applied magnetic field, and the step of applying the magnetic field may be performed under a predetermined magnetic field strength condition.

Specifically, the step of applying the magnetic field may include applying a magnetic field of 10,000 G (Gauss) or less, such as 2,500 G to 9,000 G; 3,000 G to 8,500 G; 3,500 G to 8,500 G;; 4,000 G to 8,200 G; 3,600 G to 4,500 G; 4,500 G to 6,500 G; 5,000 G to 7,000 G; 6,000 G to 8,500 G; 7,000 G to 8,500 G; or 6,000 G to 6,500 G.

Further, the step of applying the magnetic field may be performed for a period of 1 to 20 seconds, more specifically, for a period of 1 to 15 seconds; 1 to 10 seconds; 5 to 20 seconds; 10 to 20 seconds; 11 to 18 seconds; 1 to 5 seconds; 4 to 9 seconds; or 6 to 11 seconds.

In one example, the step of applying the magnetic field may include applying a magnetic field of $6,250 \pm 50$ G to the negative electrode slurry for 1 second to 5 seconds.

Furthermore, the step of applying the magnetic field may be performed by magnet parts introduced on the upper and lower parts of the applied negative electrode slurry, as mentioned above, but the size of the magnet parts may be adjusted to be larger than the size of the negative electrode slurry so that the magnetic field applied to the negative electrode slurry can be applied uniformly over the entire surface of the negative electrode slurry. For example, the magnet parts may have a length ratio of 105% to 200% based on the length in the width direction of the negative electrode slurry, more specifically, it may have a length ratio of 110% to 180%; 110% to 160%; 110% to 140%; 110% to 130%; 130% to 150%; or 105% to 120% based on the length in the width direction of the negative electrode slurry.

By controlling the magnetic field strength, application time, and/or magnet part size as described above in the step of applying the magnetic field, the present technology can satisfy the alignment (O.I) of the carbon-based negative electrode active material contained in the second negative electrode slurry of 2.5 or less, while satisfying Equation 2 of 8 or less.

Further, the step of forming the negative electrode active layer may include the steps of drying the negative electrode slurry; and rolling the dried negative electrode slurry.

In this case, the step of drying the negative electrode slurry may be applied in a manner that is capable of maintaining the orientation of the carbon-based negative electrode active material contained within the negative electrode active layer, without being particularly limited.

For example, the drying step may be performed by applying heat energy to the negative electrode slurry using a hot air dryer, a vacuum oven, or the like to dry the negative electrode slurry.

Further, the step of rolling the dried negative electrode slurry is a step of increasing the density of the negative electrode active layer by applying pressure to the dried negative electrode slurry using a roll press or the like. In this case, the rolling may be performed at a temperature condition higher than room temperature.

Specifically, the rolling may be performed at a temperature of 50°C to 100°C, more specifically at a temperature of 60°C to 100°C; 75°C to 100°C; 85°C to 100°C; 50°C to 90°C; 60°C to 80°C; or 65°C to 90°C. More specifically, the rolling may be performed at a rolling speed of 2 m/s to 7 m/s, or more specifically, 2 m/s to 6.5 m/s; 2 m/s to 6 m/s; 2 m/s to 5.5 m/s; 2 m/s to 5 m/s; 2 m/s to 4.5 m/s; 2 m/s to 4 m/s; 2.5 m/s to 4 m/s; 2.5 m/s to 3.5 m/s; 3.5 m/s to 5 m/s; 5 m/s to 7 m/s; 5.5 m/s to 6.5 m/s; or 6 m/s to 7 m/s. Furthermore, the rolling may be performed under a pressure condition of 50 MPa to 200 MPa, more specifically, under a pressure condition of 50 MPa to 150 MPa; 50 MPa to 100 MPa; 100 MPa to 200 MPa; 150 MPa to 200 MPa; or 80 MPa to 140 MPa.

By performing the rolling of the dried negative electrode slurry under the above temperature, speed and/or pressure conditions, the present technology can increase the energy density of the negative electrode while minimizing the change in the alignment of the carbon-based negative electrode active material contained in the negative electrode active layer formed.

Hereinafter, the present technology will be described in more detail by way of Examples and Experimental Examples.

However, the following Examples and Experimental Examples are illustrative of the present technology, and the present technology is not limited to the following Examples and Experimental Examples.

## Examples 1-5 and Comparative Examples 1-3. Preparation of a negative electrode for a lithium secondary battery

As a carbon-based negative electrode active material, natural graphite (average particle diameter ($D_{50}$): 18±1 $\mu$m) and artificial graphite (average particle diameter ($D_{50}$): 16±1 $\mu$m) were prepared, and as silicon-based negative electrode active material, silicon oxide ($SiO_2$) was prepared, respectively, and the first negative electrode slurry and the second negative electrode slurry were prepared using the prepared carbon-based negative electrode active material and silicon-based negative electrode active material.

Specifically, a first carbon-based negative electrode active material was prepared by mixing natural graphite and artificial graphite in a 3.5 to 4.5:5.5 to 6.5 weight ratio, with carbon black as a conductive material and carboxymethylcellulose (CMC) and styrene butadiene rubber (SBR) as binders. Then, 95 parts by weight of mixed graphite, 1 part by weight of carbon black, 1.5 parts by weight of carboxymethylcellulose (CMC), and 2.5 parts by weight of styrene butadiene rubber (SBR) were mixed with water to achieve 50% solids to prepare a first negative electrode slurry.

In addition, a negative electrode active material was prepared by mixing artificial graphite and silicon oxide (SiO2) in a weight ratio of 85-90:10-15, with carbon black as a conductive material and carboxymethylcellulose (CMC) and styrene butadiene rubber (SBR) as binders. Then, a second negative electrode slurry was prepared by mixing 95 parts by weight of mixed graphite and silicon oxide, 1 part by weight of carbon black, 1.5 parts by weight of carboxymethylcellulose (CMC) and 2.5 parts by weight of styrene butadiene rubber (SBR) with water to 45% solids.

Once each negative electrode slurry was prepared, the first and second negative electrode slurries were simultaneously cast onto a copper thin plate (thickness: 10 $\mu$m) under roll-to-roll transfer (transfer speed: 5 m/min) using a dual die coater.

Permanent magnets with a length ratio of 110-120% based on the length in the width direction of the negative electrode slurry were placed on the upper part of the applied negative electrode slurry and the lower part of the negative electrode current collector, and a magnetic field was applied for 2 to 3 seconds by adjusting the magnetic field strength as shown in Table 1 below. The negative electrode slurry with the magnetic field applied was hot air dried to form a negative electrode active layer in the form of a first negative electrode active layer and a second negative electrode active layer stacked sequentially on the negative electrode current collector. The formed negative electrode active layer was rolled at a pressure of 100~150 MPa and a transfer rate of 3 m/s at 50±1°C to prepare a negative electrode for a lithium secondary battery (average thickness of the first negative electrode active layer and the second negative electrode active layer: 110 ±5 $\mu m$ each).

In addition, for each prepared negative electrode, X-ray diffraction spectroscopy (XRD) of the second negative electrode active layer was performed to measure the spectrum. In this case, the X-ray diffraction (XRD) spectroscopic analysis was performed once each for the second carbon-based negative electrode active material and the silicon-based negative electrode active material contained in the second negative electrode active layer. The measurement conditions for X-ray diffraction (XRD) were as follows:

- Target: Cu (K$\alpha$ ray) graphite monochromators
- Slit: Divergence slit = 1 degree, Reception slit = 0.1 mm, Scattering slit = 1 degree

- Measurement area: (1,1,0) face: 76.5°<2θ<78.5° / (0,0,4) face: 53.5°<2θ<56.0°.

Then, ① the area integrals of the peaks representing the (0,0,4) and (1,1,0) crystal faces were calculated from the spectra measured with the secondary carbon-based negative electrode active material, and the ratio of these areas $(I_{004}/I_{110})$ was calculated to obtain the alignment (O.I) of the mixed graphite by region. In addition, ② the area integral of the peak representing the (1,1,1) crystal face $(I_{Si})$ was calculated from the measured spectra of the silicon-based negative electrode active material. The calculated values are shown in Table 1 below.

[Table 1]

|  | $D_{50}$ of $SiO_2$ | Magnetic field strength | O.I | $I_{Si}$ | $I_{Si}$*O.I |
|---|---|---|---|---|---|
| Comparative Example 1 | 6±1 $\mu$m | - | 5.18 | 1.60 | 8.34 |
| Comparative Example 2 | 0.5±0.05 $\mu$m | 6,250G | 0.81 | 1.94 | 1.57 |
| Comparative Example 3 | 16±1 $\mu$m | 6,250G | 0.83 | 1.92 | 1.59 |
| Example 1 | 6±1 $\mu$m | 3,500G | 2.19 | 2.64 | 5.79 |
| Example 2 | 6±1 $\mu$m | 4,000G | 1.20 | 2.81 | 3.37 |
| Example 3 | 6±1 $\mu$m | 6,250G | 0.75 | 3.73 | 2.80 |
| Example 4 | 6±1 $\mu$m | 8,050G | 0.49 | 4.24 | 2.07 |
| Example 5 | 6±1 $\mu$m | 10,100G | 0.36 | 4.50 | 1.62 |

**Examples 6-10 and Comparative Examples 4-6. Preparation of lithium secondary battery**

$LiNi_{0.7}Co_{0.1}Mn_{0.1}Al_{0.1}O_2$ with a particle size of 5 $\mu$m was prepared as a positive electrode active material, and mixed with a carbon-based conductive material and polyvinylidene fluoride as a binder in a weight ratio of 94:3:3 in N-methyl pyrrolidone (NMP) to form a slurry, cast on an aluminum thin plate, dried in a vacuum oven at 120°C, and rolled to prepare the positive electrode.

A lithium secondary battery was assembled by interposing a separator comprising 18 $\mu$m of polypropylene between the positive electrode obtained above and the negative electrode prepared in Examples 1-5 and Comparative Examples 1-3, respectively, inserting it into the case, and then injecting an electrolyte composition.

Here, the type of negative electrode applied to each lithium secondary battery is shown in Table 2 below.

[Table 2]

|  | Types of negative electrodes applied |
|---|---|
| Example 6 | Negative electrode prepared in Example 1 |
| Example 7 | Negative electrode prepared in Example 2 |
| Example 8 | Negative electrode prepared in Example 3 |
| Example 9 | Negative electrode prepared in Example 4 |
| Example 10 | Negative electrode prepared in Example 5 |
| Comparative Example 4 | Negative electrode prepared in Comparative Example 1 |
| Comparative Example 5 | Negative electrode prepared in Comparative Example 2 |
| Comparative Example 6 | Negative electrode prepared in Comparative Example 3 |

**Experimental Examples.**

To evaluate the performance of the negative electrodes according to the present disclosure, the following experiments were performed on the lithium secondary batteries prepared in Examples 6-10 and Comparative Examples 4-6.

1) Evaluating the expansion rate of the secondary battery during charging

Each of the lithium secondary batteries of the Example and Comparative Examples were activated by charging them at 25°C at a rate of 0.3C to 4.2V under CC-CV conditions and discharging them at a rate of 0.3C to 2.5V under CC conditions. The volume of the activated lithium secondary battery in the discharged state was then measured using the Archimedes principle.

Each activated lithium secondary battery was charged to 4.5V at 25°C at a rate of 2.0C under CC-CV condition, and the volume of the charged lithium secondary battery was measured in the same way as the previous volume measurement. The volume change rate of each lithium secondary battery was calculated using Equation 3 below, and the calculated volume change rate was determined by the expansion rate of the negative electrode of each lithium secondary battery. The results are shown in Table 3 below.

Volume change rate during charging = [(volume on charge - volume on discharge)/volume on discharge] X100 [Equation 3]

2) Evaluating initial charge capacity and high rate charge/discharge characteristics

Each of the lithium secondary batteries prepared in Examples 6-10 and Comparative Examples 4-6 was activated by charging at 25 °C at a rate of 0.3 C to 4.2 V under CC-CV conditions and discharging at a rate of 0.3 C to 2.5 V under CC conditions.

Each activated lithium secondary battery was subjected to a constant current/constant voltage charge (CC/CV charge) at a temperature of 25°C and the initial charge capacity was measured. The charge was performed at a constant current at a current rate of 0.1C until the voltage reached 4.2V, followed by a cut-off at a current rate of 0.005C in a constant voltage mode that maintained 4.2V. In addition, each charged secondary battery was subjected to a constant current discharge (CC discharge) and the initial discharge capacity was measured. This constant current discharge was performed at a rate of 1.0C until 1.5V was reached.

Then, at 25°C, each lithium secondary battery was fully charged to the end-of-charge voltage of 4.2~4.25V with a charging current of 2.0C rate, and the charging capacity was measured. From the measured charge capacity, the relative charge capacity ratio to the initial charge capacity was calculated to evaluate the high rate charging characteristics of each lithium secondary battery. The lithium secondary batteries were then discharged over a 1.0 to 2.0 C rate range at 0.2 C intervals to measure the discharge capacity. From the measured discharge capacities, the relative discharge capacity ratio based on the initial discharge capacity per discharge rate was calculated to evaluate the high rate discharge characteristics of each lithium secondary battery. The measured results are shown in Table 3.

[Table 3]

| | Initial capacity [mAh/g] | | High Rate Charge Characteristics [%]. | High Rate Discharge Characteristic [%] | | | | | | Expansion rate [%] |
|---|---|---|---|---|---|---|---|---|---|---|
| | Charge | Discharge | | 1.0C | 1.2C | 1.4C | 1.6C | 1.8C | 2.0C | |
| Comparative Example 4 | 459 | 399 | 85.4 | 93.8 | 92.4 | 89.7 | 87.5 | 85.3 | 83.2 | 41.8 |
| Comparative Example 5 | 464 | 401 | 88.3 | 94.3 | 93.0 | 91.1 | 89.7 | 87.5 | 86.1 | 40.2 |
| Comparative Example 6 | 463 | 400 | 87.2 | 94.2 | 92.8 | 90.5 | 89.3 | 86.9 | 85.5 | 40.6 |
| Example 6 | 462 | 403 | 90.1 | 94.8 | 93.4 | 92.6 | 91.0 | 89.5 | 88.1 | 39.7 |
| Example 7 | 464 | 404 | 90.6 | 95.1 | 93.9 | 92.7 | 91.4 | 89.8 | 88.4 | 38.6 |
| Example 8 | 466 | 406 | 91.7 | 95.6 | 94.3 | 93.1 | 91.8 | 90.3 | 88.6 | 37.5 |
| Example 9 | 466 | 405 | 90.8 | 95.2 | 94.0 | 92.9 | 91.6 | 90.0 | 88.4 | 38.9 |
| Example 10 | 465 | 403 | 90.3 | 94.6 | 93.5 | 92.4 | 91.2 | 89.6 | 88.3 | 39.3 |

As shown in Table 3 above, it can be seen that the lithium secondary battery according to the present disclosure has a reduced expansion rate during charging, a high charge and discharge capacity, and a high rate charge and discharge efficiency.

Specifically, the lithium secondary batteries of the Examples exhibited high charge capacities of over 462 mAh/g and excellent high rate charge and discharge characteristics of over 90% and over 88% for high rate charging and discharging at 2C rate conditions, respectively. The lithium secondary batteries of the Examples also exhibited reduced volume growth during charging with an expansion rate of less than 40%.

This indicates that the negative electrodes of the Examples include a two-layer negative electrode active layer, but by controlling the crystal properties of the carbon-based negative electrode active material and the silicon-based negative electrode active material contained in the second negative electrode active layer located at the outermost part to satisfy the conditions of Equation 1 and Equation 2, the charge and discharge capacity of the lithium secondary battery is increased and the high rate charge and discharge characteristics are improved.

From these results, it can be seen that the negative electrode for a lithium secondary battery according to the present disclosure has a high charge and discharge capacity and excellent high rate charge and discharge characteristics.

While the foregoing has been described with reference to preferred aspects of the technology, it will be appreciated by those skilled in the art or having ordinary knowledge of the art that various modifications and changes can be made to the technology without departing from the technical field of the technology as described in the patent claims that follow.

Thus, the technical scope of the present technology is not limited to what is disclosed in the detailed description of the specification, but should be defined by the claims of the patent.

**Claims**

1. A negative electrode for lithium secondary battery comprising:

   a negative electrode current collector,
   a first negative electrode active layer provided on at least one side of the negative electrode current collector and comprising a first carbon-based negative electrode active material, and
   a second negative electrode active layer provided on the first negative electrode active layer and comprising a second carbon-based negative electrode active material and a silicon-based negative electrode active material, wherein the second negative electrode active layer has an alignment (O.I) of the carbon-based negative electrode active material according to Equation 1 is in a range of 2.5 or less, and wherein the second negative electrode active layer satisfies Equation 2 below being less than or equal to 8:

$$[\text{Equation 1}]$$

$$O.I = I_{004}/I_{110}$$

$$[\text{Equation 2}]$$

$$I_{Si} * O.I$$

   wherein $I_{004}$ represents an area of a peak representing a (0,0,4) crystal face in an X-ray diffraction spectroscopy (XRD) measurement of the second negative electrode active layer,
   wherein $I_{110}$ represents an area of a peak representing a (1,1,0) crystal face in the X-ray diffraction (XRD) measurement of the second negative electrode active layer, and wherein $I_{Si}$ represents an area ratio of peaks representing the (1,1,1) crystal faces of the silicon-based negative electrode active material in the X-ray diffraction (XRD) spectroscopic analysis of the second negative electrode active layer.

2. The negative electrode of claim 1, wherein
   the an alignment (O.I) is in a range of 0.1 to 1.5.

3. The negative electrode of claim 1, wherein
   the second negative electrode active layer satisfies Equation 2 being in a range from 0.7 to 6.

4. The negative electrode of claim 1, wherein
   the first carbon-based negative electrode active material and the second carbon-based negative electrode active material comprise at least one of a natural graphite or an artificial graphite.

5. The negative electrode of claim 1, wherein
the silicon-based negative electrode active material comprises at least one of silicon (Si), silicon carbide (SiC), or a silicon oxide $SiO_q$, where $0.8 \leq q \leq 2.5$.

6. The negative electrode of claim 1, wherein
the silicon-based negative electrode active material is included in an amount ranging from 1 wt% to 40 wt% with respect to a total weight of the negative electrode active material included in the first and second negative electrode active layers.

7. The negative electrode of claim 1, wherein

the second carbon-based negative electrode active material has an average particle diameter (Dc) in a range of 1 $\mu$m to 50 $\mu$m,
an average particle diameter (Ds) of the silicon-based negative electrode active material is in a range of 0.1 $\mu$m to 10 $\mu$m, wherein
an average particle diameter ratio (Dc/Ds) of the second carbon-based negative electrode active material and the silicon-based negative electrode active material is in a range from 2 to 10.

8. A manufacturing method of a negative electrode for a lithium secondary battery comprising:

applying a first negative electrode slurry and a second negative electrode slurry, such that the first negative electrode slurry is located on at least one surface of a negative electrode current collector, and the second negative electrode slurry is located on the first negative electrode slurry;
applying a magnetic field to the first and second negative electrode slurries; and drying the first and second negative electrode slurries to form a negative electrode active layer,
wherein the first negative electrode slurry comprises a first carbon-based negative electrode active material,
wherein the second negative electrode slurry comprises a second carbon-based negative electrode active material and a silicon-based negative electrode active material, and
wherein the magnetic field has a strength of 10,000 G or less.

9. The manufacturing method of claim 8, wherein
the applying the magnetic field is performed for a period ranging from 1 second to 20 seconds.

10. A lithium secondary battery having an electrode assembly comprising a positive electrode, the negative electrode according to claim 1, and a separator disposed between the positive electrode and the negative electrode.

11. The lithium secondary battery of claim 10, wherein

the positive electrode comprises a positive electrode active layer provided on at least one side of a positive electrode current collector,
wherein the positive electrode includes one or more positive electrode active materials represented by Chemical Formula 1 or Chemical Formula 2:

[Chemical Formula 1]      $Li_x[Ni_yCo_zMn_wM^1_v]O_2$

[Chemical Formula 2]      $LiM^2_pMn_{1-p}O_4$

wherein $M^1$ is at least one element selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo,
wherein x, y, z, w, and v are $1.0 \leq x \leq 1.30$, $0.5 \leq y < 1$, $0 < z \leq 0.3$, $0 < w \leq 0.3$, and $0 \leq v \leq 0.1$, respectively, where $y+z+w+v=1$,
wherein $M^2$ is Ni, Co, or Fe, and
wherein p is $0.05 \leq p \leq 1.0$.

12. The lithium secondary battery of claim 11, wherein
the one or more positive electrode active materials comprises one or more among $LiNi_{0.8}Co_{0.1}Mn_{0.1}O_2$, $LiNi_{0.6}Co_{0.2}Mn_{0.2}O_2$, $LiNi_{0.9}CO_{0.05}Mn_{0.05}O_2$, $LiNi_{0.6}Co_{0.2}Mn_{0.1}Al_{0.1}O_2$, $LiNi_{0.6}Co_{0.2}Mn_{0.15}Al_{0.05}O_2$, $LiNi_{0.7}Co_{0.1}Mn_{0.1}Al_{0.1}O_2$, $LiNi_{0.7}Mn_{1.3}O_4$, $LiNi_{0.5}Mn_{1.5}O_4$, or $LiNi_{0.3}Mn_{1.7}O_4$.

**13.** The lithium secondary battery of claim 10, wherein
the electrode assembly is a stack-type electrode assembly, a zigzag electrode assembly, or a zigzag-stack type electrode assembly.

## INTERNATIONAL SEARCH REPORT

| | International application No. |
|---|---|
| | **PCT/KR2024/095877** |

### A. CLASSIFICATION OF SUBJECT MATTER

**H01M 4/133**(2010.01)i; **H01M 4/134**(2010.01)i; **H01M 4/1393**(2010.01)i; **H01M 4/1395**(2010.01)i; **H01M 4/587**(2010.01)i; **H01M 4/36**(2006.01)i; **H01M 4/38**(2006.01)i; **H01M 4/48**(2010.01)i; **H01M 4/505**(2010.01)i; **H01M 4/525**(2010.01)i

According to International Patent Classification (IPC) or to both national classification and IPC

### B. FIELDS SEARCHED

Minimum documentation searched (classification system followed by classification symbols)

H01M 4/133(2010.01); H01M 10/052(2010.01); H01M 4/134(2010.01); H01M 4/1393(2010.01); H01M 4/58(2010.01); H01M 50/411(2021.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 탄소(carbon), 실리콘(silicon), 배향(orient), 리튬(lithium), 이차전지(secondary battery)

### C. DOCUMENTS CONSIDERED TO BE RELEVANT

| Category* | Citation of document, with indication, where appropriate, of the relevant passages | Relevant to claim No. |
|---|---|---|
| A | KR 10-2022-0146194 A (SAMSUNG SDI CO., LTD.) 01 November 2022 (2022-11-01)<br>See paragraphs [0038]-[0041] and [0061]; and claims 1 and 8-10. | 1-13 |
| A | KR 10-2020-0019957 A (MITSUI MINING & SMELTING CO., LTD.) 25 February 2020 (2020-02-25)<br>See paragraphs [0052]-[0053] and [0102]. | 1-13 |
| A | KR 10-2536147 B1 (LG ENERGY SOLUTION, LTD.) 26 May 2023 (2023-05-26)<br>See claim 1. | 1-13 |
| A | KR 10-2021-0039599 A (LG CHEM, LTD.) 12 April 2021 (2021-04-12)<br>See paragraph [0036]; and claims 1 and 4. | 1-13 |
| A | KR 10-2022-0048461 A (LG ENERGY SOLUTION, LTD.) 19 April 2022 (2022-04-19)<br>See claims 1 and 4. | 1-13 |

☐ Further documents are listed in the continuation of Box C.  ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **24 September 2024** | **25 September 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

| International application No. |
|---|
| **PCT/KR2024/095877** |

| Patent document cited in search report | | | Publication date (day/month/year) | Patent family member(s) | | | Publication date (day/month/year) |
|---|---|---|---|---|---|---|---|
| KR | 10-2022-0146194 | A | 01 November 2022 | CN | 115241417 | A | 25 October 2022 |
| | | | | EP | 4080604 | A2 | 26 October 2022 |
| | | | | EP | 4080604 | A3 | 02 November 2022 |
| | | | | JP | 2022-167890 | A | 04 November 2022 |
| | | | | US | 2022-0352543 | A1 | 03 November 2022 |
| KR | 10-2020-0019957 | A | 25 February 2020 | CN | 110945691 | A | 31 March 2020 |
| | | | | EP | 3667781 | A1 | 17 June 2020 |
| | | | | JP | 2020-205268 | A | 24 December 2020 |
| | | | | JP | 6796720 | B2 | 09 December 2020 |
| | | | | JP | 6978563 | B2 | 08 December 2021 |
| | | | | KR | 10-2315073 | B1 | 21 October 2021 |
| | | | | US | 11831007 | B2 | 28 November 2023 |
| | | | | US | 2020-0243847 | A1 | 30 July 2020 |
| | | | | WO | 2019-031601 | A1 | 14 February 2019 |
| KR | 10-2536147 | B1 | 26 May 2023 | WO | 2024-111906 | A1 | 30 May 2024 |
| KR | 10-2021-0039599 | A | 12 April 2021 | | None | | |
| KR | 10-2022-0048461 | A | 19 April 2022 | CN | 115769398 | A | 07 March 2023 |
| | | | | EP | 4163993 | A1 | 12 April 2023 |
| | | | | JP | 2023-528519 | A | 04 July 2023 |
| | | | | US | 2023-0261191 | A1 | 17 August 2023 |
| | | | | WO | 2022-080836 | A1 | 21 April 2022 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020230076642